# EUROPEAN PATENT APPLICATION

(11) **EP 4 054 174 A1**
(43) Date of publication of application: **07.09.2022**
(21) Application number: 22156061.8
(22) Date of filing: 10.02.2022
(51) Int. Cl.: H04N 5/232, G08B 13/196, H04N 7/18

(54) **IMAGE CAPTURING CONTROL APPARATUS, INFORMATION PROCESSING APPARATUS, CONTROL METHODS THEREOF, IMAGE CAPTURING APPARATUS, AND PROGRAM**

(30) Priority: 04.03.2021 JP 2021034667
(71) Applicant: CANON KABUSHIKI KAISHA, Ohta-ku Tokyo 146-8501 (JP)
(72) Inventor: TAKAMI, Shinjiro, Ohta-ku, 146-8501 (JP)
(74) Representative: TBK

(57) **Abstract**

An image capturing apparatus (106,101) that includes a moving unit that moves an image capturing area: performs a tracking control for detecting a tracking target from a captured video image, and tracking the tracking target while controlling the moving unit to move the image capturing area of the image capturing apparatus; obtains information indicating a state of movement control of the image capturing area that is performed by the moving unit; transmits a response that includes the information indicating the obtained movement control state, to an external apparatus in accordance with a request from the external apparatus; and changes the information indicating the movement control state that is to be included in the response, based on a state of tracking that is performed in the tracking control.

## Description

### BACKGROUND OF THE INVENTION

### Field of the Invention

The present invention relates to an image capturing control apparatus, an information processing apparatus, control methods thereof, an image capturing apparatus, and program.

### Description of the Related Art

Commonly, in monitoring cameras that have a pan-tilt-zoom mechanism (hereinafter, "PTZ mechanism"), a function of tracking an object (tracking target) detected from a captured image in accordance with a request from the user is provided. In the tracking function, PTZ control that uses the PTZ mechanism in order to maintain an object that is a tracking target within an angle of view is executed. Commonly, tracking is started by a manager giving a tracking start request to a monitoring camera after performing settings of the size of a tracking target and the like at the time of initial settings of the monitoring camera. The camera can be operated by a plurality of users after tracking has been started, and, for example, there are cases where a security guard operates the PTZ mechanism of the monitoring camera. In addition, there are two tracking states, namely "tracking is being performed" and "tracking is not being performed". The state of "tracking is being performed" refers to a state where the PTZ mechanism is controlled and a tracking target is being actually tracked. The state of "tracking is not being performed" refers to a state where a tracking target not actually tracked, such as a state of waiting for a tracking target to be detected or a state of having lost a tracking target and returned to a predetermined position for resuming tracking.

Japanese Patent Laid-Open No. 2012-257173 describes processing in which a PT (pan and tilt) tracking mode is started after a tracking target has been detected, PT control is repeated, the PT tracking mode is ended when the tracking target is stopped or the tracking target is lost, and the operation is repeated from detection of a tracking target again. In addition, a command for obtaining a PTZ state such as a PTZ position, a moving state, and an error state are implemented in a monitoring camera. A client apparatus obtains a PTZ state from the monitoring camera using this command, and displays the obtained PTZ state on the screen of the client apparatus, thereby notifying the user of the PTZ state of the monitoring camera. Such notification of a PTZ state is not performed in consideration of whether or not tracking is being performed. That is to say, even a PTZ state when tracking is being performed is obtained in accordance with the above-described command, and is notified to the user. A command defined based on the standards stipulated by ONVIF (Open Network Video Interface Forum) is a command example of such a command (ONVIF Specification (http://www.ovnif.org/specs/DocMap.html))

However, when the client apparatus obtains a PTZ state from the monitoring camera in accordance with a command after tracking has started, and performs notification, there are cases where the tracking state and the PTZ state that is notified do not match. When the PTZ is stopped due to the tracking target having stopped, even when tracking is being performed, the PTZ state is notified as "stopped", for example. Alternatively, when the monitoring camera is returning to a predetermined PTZ position due to a tracking target being lost and tracking having ended, even if tracking is not being performed, the PTZ state is notified as "moving". Therefore, for example, a security guard may determine that the PTZ is not moving, based on the PTZ state received from the monitoring camera, and perform PTZ manipulation when tracking is being performed, or may determine that PTZ is moving when tracking is not being performed, and hesitate to perform PTZ manipulation, thus hindering monitoring.

### SUMMARY OF THE INVENTION

The present invention provides a technique that enables notification on which a tracking state of tracking control is appropriately reflected, regarding a movement control state of an image capturing area such as a PTZ state.

The present invention in its first aspect provides an image capturing control apparatus as specified in claims 1 to 12.

The present invention in its second aspect provides an image capturing apparatus as specified in claim 13.

The present invention in its third aspect provides an information processing apparatus as specified in claims 14 to 16.

The present invention in its fourth aspect provides a control method of an image capturing apparatus as specified in claim 17.

The present invention in its fifth aspect provides a control method of an information processing apparatus as specified in claim 18.

The present invention in its sixth aspect provides a program as specified in claim 19.

Further features of the present invention will become apparent from the following description of exemplary embodiments with reference to the attached drawings.

### BRIEF DESCRIPTION OF THE DRAWINGS

FIG. 1 is a diagram showing an exemplary configuration of a monitoring system according to a first embodiment.
FIG. 2A is a block diagram showing an exemplary function configuration of a monitoring camera according to the first embodiment.
FIG. 2B is a block diagram showing an exemplary function configuration of a client apparatus according to the first embodiment.
FIG. 2C is a block diagram showing an exemplary function configuration for realizing tracking PTZ control processing.
FIG. 3 is a diagram showing an exemplary data configuration of a PTZ state of the monitoring camera according to the first embodiment.
FIG. 4 is a diagram showing transition of a tracking state of the monitoring camera according to the first embodiment.
FIG. 5 is a diagram showing an example of a PTZ manipulation screen of the client apparatus according to the first embodiment.
FIG. 6 is a sequence diagram for obtaining a PTZ state according to the first embodiment.
FIG. 7 is a flowchart of PTZ state obtaining processing that is performed by the monitoring camera according to the first embodiment.
FIG. 8 is a sequence diagram for obtaining a PTZ state according to a second embodiment.
FIG. 9 is a flowchart of PTZ state obtaining processing that is performed by a monitoring camera according to the second embodiment.
FIG. 10 is a flowchart of PTZ state obtaining processing that is performed by a monitoring camera according to a third embodiment.
FIG. 11 is a flowchart of PTZ state obtaining processing that is performed by a monitoring camera according to a fourth embodiment.
FIG. 12 is a diagram showing an example of a PTZ manipulation screen of a client apparatus according to a fifth embodiment.
FIG. 13 is a flowchart showing processing that is performed by the client apparatus according to the fifth embodiment.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### First Embodiment

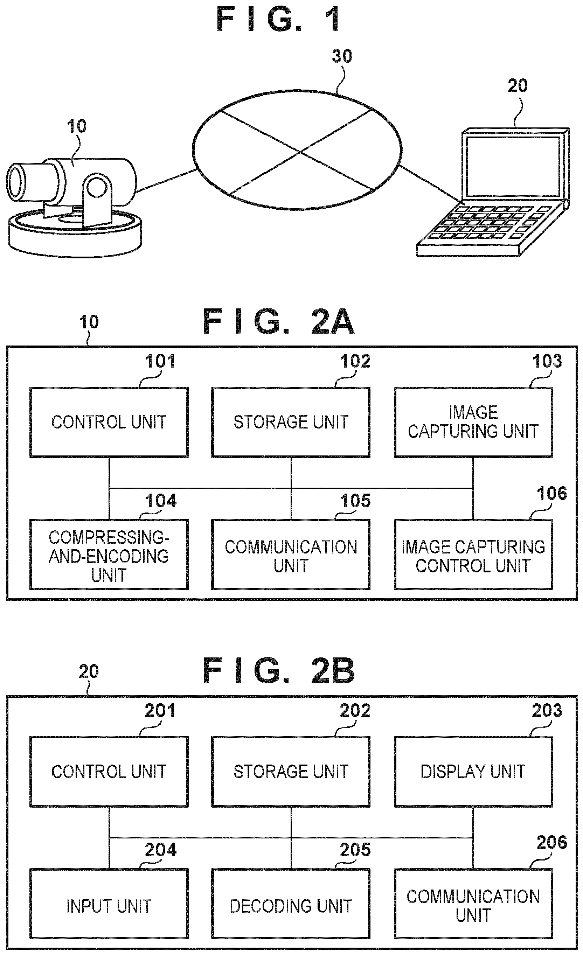

FIG. 1 is a diagram showing an exemplary configuration of a monitoring system according to a first embodiment. A monitoring camera 10 and a client apparatus 20 are connected via a network 30 to be communicable with each other. The client apparatus 20 transmits, to the monitoring camera 10, a command to start tracking, a command to obtain a PTZ state, and the like. The monitoring camera 10 transmits a response to a command, to the client apparatus 20, and performs tracking control for tracking a target and PTZ control for controlling an image capturing area.

FIG. 2A is a diagram showing an internal configuration of the monitoring camera 10. A control unit 101 performs overall control of the monitoring camera 10. The control unit 101 is constituted by a CPU, for example. A storage unit 102 is used as various data storage regions, such as a storage region for a program that is mainly executed by the control unit 101, a work region for a program that is being executed, a storage region for states such as a tracking state, a setting value storage region, and a storage region for image data generated by an image capturing unit 103 to be described later. The storage unit 102 includes a RAM, a ROM, and a hard disk, for example. The image capturing unit 103 converts analog signals obtained by capturing an image of a subject formed by an imaging optical system of the monitoring camera 10, into digital data, and outputs the digital data as a captured image to the storage unit 102. When the captured image is output to the storage unit 102, the control unit 101 receives an image obtaining event from the image capturing unit 103.

A compressing-and-encoding unit 104 performs compressing-and-encoding processing on a captured image output by the image capturing unit 103, in accordance with a format of JPEG, H.264, H.265, or the like to generate image data, and outputs the image data to the storage unit 102. A communication unit 105 communicates with an external apparatus (in this example, the client apparatus 20). The communication unit 105 receives various control commands from the external apparatus, and transmits responses to control commands and video images to the external apparatus, for example. When a command is received from the external apparatus, the control unit 101 receives a command receiving event from the communication unit 105. An image capturing control unit 106 controls tilt driving, pan driving, or zoom driving of the image capturing unit 103 in accordance with a pan, tilt, or zoom value input from the control unit 101, and changes the image capturing area thereof.

FIG. 2B is a diagram showing an internal configuration of the client apparatus 20. The client apparatus 20 can be realized by an information processing apparatus such as a general-purpose computer. A control unit 201 is constituted by a CPU, for example, and performs overall control of the client apparatus 20. A storage unit 202 is used as various data storage regions such as a storage region for a program that is mainly executed by the control unit 201 and a work region for a program that is being executed. The storage unit 202 includes a RAM, a ROM, and a hard disk, for example. A display unit 203 is constituted by an LCD, an organic EL display, or the like, and displays, for the user of the client apparatus 20, a viewer screen of a video image received from the monitoring camera 10, a PTZ manipulation screen, various messages, and like.

An input unit 204 is constituted by buttons, cross keys, a touch panel, a mouse, and the like, and notifies the control unit 201 of the content of manipulation performed on a screen by the user. A decoding unit 205 decodes compressed and encoded image data received via a communication unit 206, based on a format of JPEG, H.264, H.265, or the like, and deploys the decoded data in the storage unit 202. The communication unit 206 communicates with an external apparatus (in this example, the monitoring camera 10). The communication unit 206 transmits a command to start tracking, a command to obtain a PTZ state, and the like to the monitoring camera 10, and receives responses to various control commands and a video image from the monitoring camera 10.

The internal configurations of the monitoring camera 10 and the client apparatus 20 have been described above with reference to FIGS. 2A and 2B. Note that the processing blocks shown in FIGS. 2A and 2B illustrate exemplary preferred embodiments of the monitoring camera and the client apparatus according to the present invention, and there is no limitation to this. Various deformations and modifications can be made without departing from the gist of the present invention, by providing a sound input unit and a sound output unit.

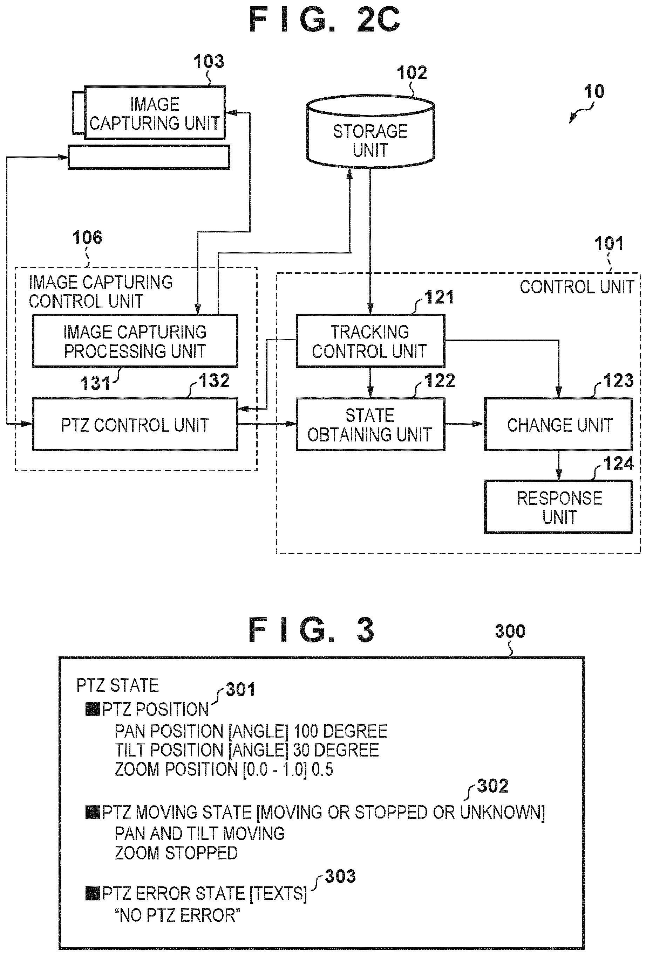

FIG. 2C is a block diagram showing an exemplary function configuration for realizing tracking PTZ control processing that is performed by the control unit 101 and the image capturing control unit 106. An image capturing processing unit 131 causes the image capturing unit 103 to capture an image, in accordance with an instruction from the control unit 101, and stores the obtained image in the storage unit 102. A PTZ control unit 132 is an example of a configuration for performing image capturing area control for controlling movement of the image capturing area of the image capturing unit 103, and controls pan/tilt/zoom movement of the image capturing unit 103 in accordance with an instruction (a pan, tilt, or zoom value) from the control unit 101. Note that, in the present specification, pan movement refers to moving the image capturing direction in the horizontal direction, tilt movement refers to moving the image capturing direction in the vertical direction, and zoom movement refers to changing the angle of view to the wide side or the tele side. In addition, the PTZ control unit 132 obtains a PTZ state (which will be described lather with reference to FIG. 3) indicating the pan, tilt, and zoom moving states and positions of the image capturing unit 103, and notifies the control unit 101 of the PTZ states.

A tracking control unit 121 detects a tracking target based on an image captured by the image capturing unit 103, and tracks the tracking target while causing the PTZ control unit 132 to control the PTZ state of the monitoring camera 10. A state obtaining unit 122 obtains the PTZ state of the PTZ control unit 132 as a control state of image capturing area control. APTZ state is an example of information indicating a movement control state of an image capturing area. In addition, the state obtaining unit 122 obtains the tracking state of the tracking control unit 121. A response unit 124 transmits a response that includes the PTZ state obtained by the state obtaining unit 122, via the communication unit 105 in accordance with a request (PTZ obtaining command) received from the client apparatus 20 via the communication unit 105. A change unit 123 changes the PTZ state that is to be included in a response, based on the state of tracking that is being performed by the tracking control unit 121, such that the user of the client apparatus 20 can more appropriately determine a PTZ state, that is to say a PTZ state that more appropriately reflects the tracking state is obtained.

Next, an exemplary configuration of data indicating a PTZ state will be described with reference to FIG. 3. A PTZ state 300 includes information such as a PTZ position 301, a PTZ moving state 302, and a PTZ error state 303. The PTZ position 301 indicates the current pan, tilt, and zoom positions, which are each expressed by an angle, a normalized value, or the like. The PTZ moving state 302 represents pan, tilt, and zoom moving states as a state of "moving", "stopped", "unknown", and the like. The PTZ error state 303 indicates an error occurring in pan, tilt, or zoom movement. In the PTZ error state 303, error content is indicated by texts or the like. Note that, when no error is occurring, the PTZ error state 303 may be indicated by a null character, or may be characters, texts, or the like indicating that no error is occurring.

Note that the data configuration of a PTZ state shown in FIG. 3 is exemplary, and the format of the data configuration of a PTZ state is not limited. The ONVIF format or an original format of the monitoring camera can be used for data indicating a PTZ state, for example, and it is sufficient that information indicating a PTZ state such as PTZ positions, moving states, and an error state is included.

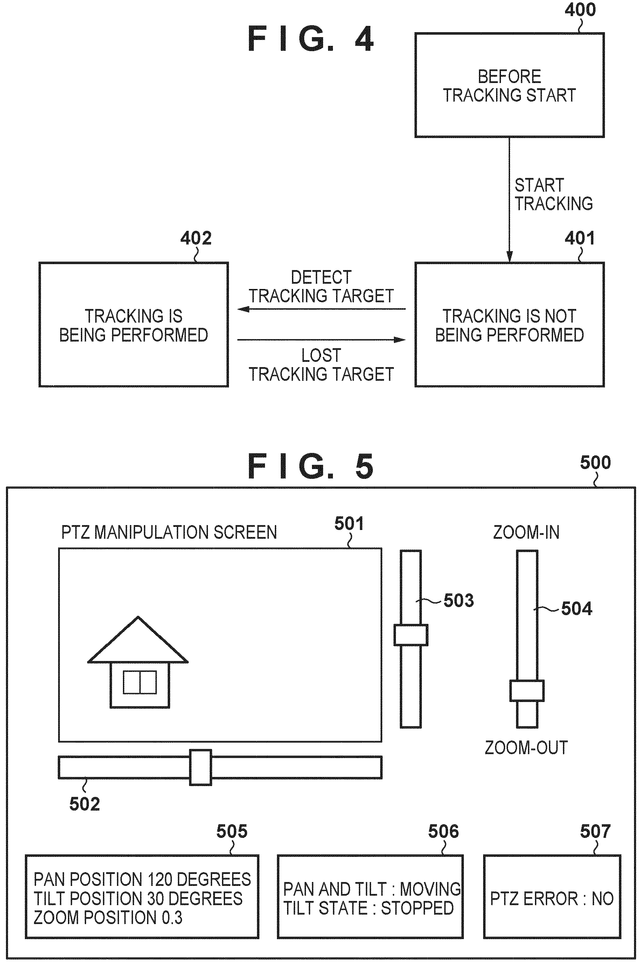

Next, state transition of tracking control that is performed by the tracking control unit 121 of the monitoring camera 10 will be described. FIG. 4 is a diagram showing an example of state transition of tracking of the monitoring camera 10 according to the first embodiment. A state 400 refers to a state before the monitoring camera 10 starts tracking processing. Upon receiving a tracking start command from the client apparatus 20, the monitoring camera 10 transitions to a state 401. In the state 401, the tracking control unit 121 of the monitoring camera 10 starts tracking processing, and first, starts processing for detecting a tracking target from a captured video image. This state 401 is referred to as a "state where tracking is not being performed". When a tracking target is detected, the tracking control unit 121 transitions to a state 402. The state 402 is a state where the tracking control unit 121 is tracking the tracking target while controlling the PTZ. This state 402 is referred to as a "state where tracking is being performed". When the tracking control unit 121 that is performing a tracking operation loses the tracking target, tracking control transitions from the state 402 to the state 401, and the tracking control unit 121 starts processing for detecting a tracking target again. While tracking control is transitioning from the state 402 to the state 401 due to the tracking target being lost, and while processing for detecting a tracking target is being performed in the state 401, the state of tracking processing is the state where tracking is not being performed. In this manner, a state where tracking processing is being performed by the tracking control unit 121 but actually a tracking target is not being tracked is referred to as a "state where tracking is not being performed".

Next, the PTZ manipulation screen that is displayed by the display unit 203 of the client apparatus 20 according to the first embodiment will be described. FIG. 5 shows an example of the PTZ manipulation screen of the client apparatus 20 according to the first embodiment. The user can perform pan/tilt/zoom manipulation of the monitoring camera 10 using a PTZ manipulation screen 500. A video image display area 501 is an area for displaying a video image received from the monitoring camera 10. The user can manipulate the monitoring camera 10 to a desired PTZ position by manipulating a pan manipulation bar 502, a tilt manipulation bar 503, and a zoom manipulation bar 504 while viewing the video image display area 501. In addition, the client apparatus 20 periodically transmits a PTZ state obtaining command to the monitoring camera 10, and obtains the PTZ state 300 from the monitoring camera 10. The client apparatus 20 displays the PTZ position 301, the PTZ moving state 302, and the PTZ error state 303 indicated by the obtained PTZ state 300, in a PTZ position display area 505, a PTZ moving state display area 506, and a PTZ error state display area 507. In this manner, the client apparatus 20 can inform the user of the current PTZ state.

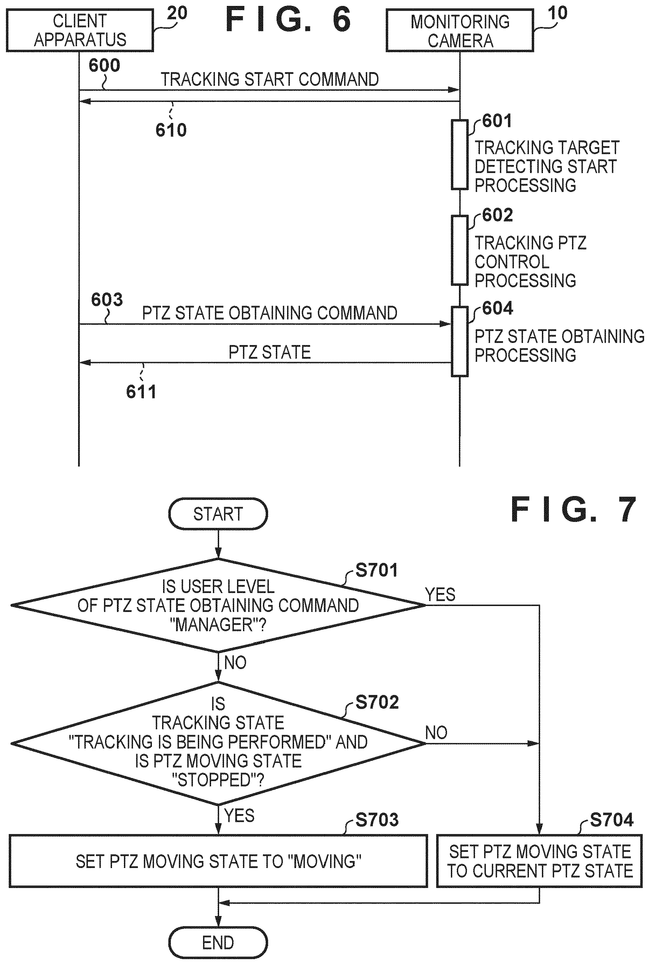

Next, a sequence in which the monitoring camera 10 according to the first embodiment receives a PTZ state obtaining command from the client apparatus 20, and returns a PTZ state will be described with reference to FIG. 6. The client apparatus 20 transmits a tracking start command 600 via the communication unit 206 in order to start tracking. Upon receiving the tracking start command 600 via the communication unit 105, the monitoring camera 10 transmits a command response 610 to the client apparatus 20 via the communication unit 105. The client apparatus 20 receives this command response 610 via the communication unit 206.

Upon receiving the tracking start command 600, the monitoring camera 10 transitions to the state 401 of "tracking is not being performed". More specifically, the tracking control unit 121 of the control unit 101 starts tracking target detecting processing 601 for detecting a tracking target in a video image that is obtained from the image capturing unit 103, in accordance with the tracking start command 600, and sets the tracking state stored in the storage unit 102 to "tracking is not being performed". When a tracking target is detected in the tracking target detecting processing 601, the tracking control unit 121 transitions to the state 402 where "tracking is being performed". In the state 402, the tracking control unit 121 executes tracking PTZ control processing 602, and sets the tracking state in the storage unit 102 to "tracking is being performed". In the tracking PTZ control processing 602, the tracking control unit 121 tracks the tracking target detected in the tracking target detecting processing 601. At this time, the tracking control unit 121 causes the PTZ control unit 132 to perform PTZ control such that the tracking target is within the angle of view of the image capturing unit 103, and/or the tracking target has a predetermined size in a video image. The PTZ control unit 132 stores the PTZ state in the storage unit 102. As a result of the tracking PTZ control processing 602 being performed, the PTZ of the image capturing unit 103 moves while the tracking target is moving, and when the tracking target stops, the PTZ also stops. The PTZ control unit 132 updates the PTZ state stored in the storage unit 102 to the most recent PTZ state.

The control unit 201 of the client apparatus 20 transmits a PTZ state obtaining command 603 via the communication unit 206 in order to inform the user of the current PTZ state. Upon receiving the PTZ state obtaining command 603 via the communication unit 105, the control unit 101 of the monitoring camera 10 performs PTZ state obtaining processing 604. The PTZ state obtaining processing 604 is executed by the state obtaining unit 122 and the change unit 123 in cooperation, and will be described later in detail. The control unit 101 (the response unit 124) transmits, from the communication unit 105, the PTZ state obtained in PTZ state obtaining processing as a response 611 to the PTZ state obtaining command 603. The client apparatus 20 obtains the PTZ state of the monitoring camera 10 by receiving the response 611 to the PTZ state obtaining command 603 via the communication unit 206.

Note that the sequence described above with reference to FIG. 6 does not limit the protocol of each command. The control protocol of ONVIF or an original control protocol of the monitoring camera can be used as a protocol of each command of this embodiment, for example.

Next, the PTZ state obtaining processing 604 that is performed by the monitoring camera 10 according to the first embodiment will be described with reference to FIG. 7.

In step S701, the state obtaining unit 122 of the control unit 101 obtains a user level from authentication information of the PTZ state obtaining command 603 of the client, and determines whether or not the user level is "manager". If the user level of the PTZ state obtaining command is "manager", the procedure transitions to step S704, and, if the user level of the PTZ state obtaining command is not "manager", the procedure transitions to step S702. In step S702, the state obtaining unit 122 obtains the tracking state of the tracking control unit 121 and the current PTZ state of the PTZ control unit 132 from the storage unit 102. The change unit 123 then determines whether or not the tracking state is the state where tracking is being performed and the PTZ is stopped, based on the obtained tracking state and PTZ state. Note that a configuration is adopted in which the tracking control unit 121 and the PTZ control unit 132 respectively store the tracking state and the PTZ state in the storage unit 102, and the state obtaining unit 122 obtains the tracking state and the PTZ state from the storage unit 102, but there is no limitation to this. A configuration may also be adopted in which the state obtaining unit 122 directly obtains the tracking state and the PTZ state from the tracking control unit 121 and the PTZ control unit 132, respectively.

If it is determined in step S702 that tracking is being performed and the PTZ is stopped, the procedure transitions to step S703, otherwise the procedure transitions to step S704. In step S703, the change unit 123 sets, to "moving", the PTZ moving state of the PTZ state that is to be included in a response to the PTZ state obtaining command, and ends the procedure. That is to say, the change unit 123 changes the PTZ moving state of the PTZ state obtained by the state obtaining unit 122, from "stopped" to "moving". On the other hand, in step S704, the change unit 123 sets the PTZ moving state included in the current PTZ state obtained by the state obtaining unit 122, as a PTZ moving state that is to be included in a response to the PTZ state obtaining command without changing anything, and ends the procedure.

As described above, with the monitoring camera 10 according to the first embodiment, when tracking is being performed, even if a PTZ operation is stopped, a response in which the PTZ moving state is "moving" is transmitted to the client apparatus 20. Accordingly, when tracking is being performed while the PTZ is stopped due to the tracking target stopping, it is indicated to the user that the PTZ is being used. Therefore, it is possible to prevent the user from mistakenly performing PTZ manipulation when tracking is being performed. In addition, if the user level of the received PTZ state obtaining command is "manager", the PTZ state is notified as is, and thus the manager can accurately understand the current PTZ state of the monitoring camera 10.

### Second Embodiment

In the first embodiment, a configuration has been described in which, when the tracking state is "tracking is being performed", even if the PTZ is actually stopped, a response in which the PTZ moving state is "moving" is returned to a PTZ state obtaining command from the client apparatus 20. According to a second embodiment, a configuration will be described in which, when the tracking state is "tracking is not being performed", even if the PTZ is actually moving, a response in which the PTZ moving state is "stopped" is returned to a PTZ state obtaining command.

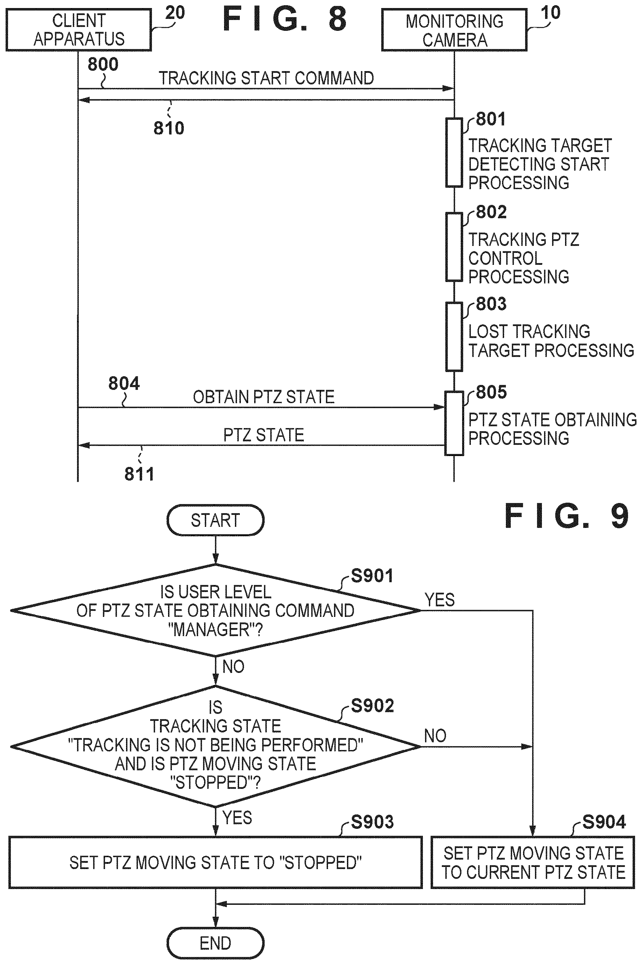

Note that configurations of a monitoring system, a monitoring camera 10, and a client apparatus 20, tracking PTZ control processing, and the like in the second embodiment are similar to those of the first embodiment (FIGS. 1 to 6). Processing that is different from that of the first embodiment will be mainly described below. FIG. 8 is a sequence diagram for obtaining a PTZ state according to the second embodiment. A sequence in which the monitoring camera 10 according to the second embodiment receives a PTZ state obtaining command from the client apparatus 20, and returns a PTZ state will be described with reference to FIG. 8.

The client apparatus 20 transmits a tracking start command 800 for starting tracking, from the communication unit 206. The monitoring camera 10 receives the tracking start command 800 via the communication unit 105, and transmits a command response 810 via the communication unit 105. The client apparatus 20 receives the command response 810 to the tracking start command 800, via the communication unit 206.

Upon receiving the tracking start command 800, the monitoring camera 10 transitions to the state 401 where tracking is not being performed. More specifically, the tracking control unit 121 starts tracking target detecting processing 801 for detecting a tracking target in a video image obtained from the image capturing unit 103, and sets the tracking state stored in the storage unit 102 to "tracking is not being performed". When a tracking target is detected in the tracking target detecting processing 801, the monitoring camera 10 transitions to the state 402 where tracking is being performed. In the state 402, the tracking control unit 121 executes tracking PTZ control processing 802, and sets the tracking state in the storage unit 102 to "tracking is being performed". In the tracking PTZ control processing 802, the control unit 101 tracks the tracking target detected in the tracking target detecting processing 801. At this time, the tracking control unit 121 executes PTZ control such that the tracking target is within the angle of view of the image capturing unit 103, and/or the tracking target has a predetermined size in the video image. The PTZ control unit 132 stores the PTZ state in the storage unit 102. In addition, in the tracking PTZ control processing 802, while the tracking target is moving, the PTZ also moves, and, when the tracking target stops, the PTZ also stops. The PTZ control unit 132 updates the PTZ state stored in the storage unit 102 to the most recent PTZ state.

When the tracking target is lost while tracking is being performed, the tracking control unit 121 performs lost tracking target processing 803. In the lost tracking target processing 803, the tracking control unit 121 sets the tracking state stored in the storage unit 102 to "tracking is not being performed", and start PTZ control for moving the PTZ to a predetermined PTZ position for detecting a tracking target. At this time, the tracking state is "tracking is not being performed", but the PTZ state is "moving".

The control unit 201 of the client apparatus 20 transmits a PTZ state obtaining command 804 via the communication unit 206 in order to inform the user of the current PTZ state. Upon receiving the PTZ state obtaining command 804 via the communication unit 105, the control unit 101 of the monitoring camera 10 performs PTZ state obtaining processing 805. The PTZ state obtaining processing 805 that is realized by the state obtaining unit 122 and the change unit 123 in cooperation will be described later. The control unit 101 (the response unit 124) transmits a PTZ state obtained in PTZ state obtaining processing, as a response 811 to the PTZ state obtaining command 804, from the communication unit 105. The client apparatus 20 obtains the PTZ state of the monitoring camera 10 by receiving the response 811 to the PTZ state obtaining command 804 via the communication unit 206.

Note that the above sequence described with reference to FIG. 8 does not limit the protocol of each command. The ONVIF control protocol or an original control protocol of the monitoring camera can be used as the protocol of each command of this embodiment, for example.

Next, the PTZ state obtaining processing 805 of the monitoring camera 10 according to the second embodiment will be described with reference to FIG. 9.

In step S901, the control unit 101 obtains a user level from authentication information of a PTZ state obtaining command from the client, and determines whether or not the user level is "manager". If the user level of the PTZ state obtaining command is "manager", the procedure transitions to step S904, and if the user level of the PTZ state obtaining command is not "manager", the procedure transitions to step S902. In step S902, the state obtaining unit 122 obtains the tracking state of the tracking control unit 121 and the current PTZ state of the PTZ control unit 132 from the storage unit 102. The state obtaining unit 122 may directly obtain the tracking state and the PTZ state from the tracking control unit 121 and the PTZ control unit 132, respectively, similarly to the first embodiment. The change unit 123 determines whether or not the tracking state is "tracking is not being performed" and the PTZ moving state is "moving", based on the tracking state and the PTZ state obtained by the state obtaining unit 122. If it is determined that tracking is not being performed and the PTZ moving state is "moving", the procedure transitions to step S903, otherwise, the procedure transitions to step S904. In step S903, the change unit 123 sets the PTZ moving state in the PTZ state that is to be included in a response to the PTZ state obtaining command, to "stopped", and ends the procedure. On the other hand, in step S904, the change unit 123 sets the PTZ moving state included in the current PTZ state obtained from the image capturing control unit 106, as the PTZ moving state that is to be included in a response to the PTZ state obtaining command without any change, and ends the procedure.

As described above, according to the second embodiment, when the monitoring camera 10 is not performing tracking, even when PTZ is actually moving, a response in which the PTZ moving state is "stopped" is returned to the client apparatus 20. Accordingly, for example, while the monitoring camera 10 is returning to a predetermined PTZ position due to the tracking target being lost, it is possible to indicate, to the user, that the PTZ is not being used, and to prevent the user from hesitating to perform PTZ manipulation. In addition, similarly to the first embodiment, if the user level of the received PTZ state obtaining command is "manager", the PTZ state is notified as is, and thus the manager can accurately understand the current PTZ state of the monitoring camera 10 itself.

Note that it is needless to say that the first embodiment and the second embodiment can be combined. By combining the first and second embodiments, a configuration can be achieved in which, when tracking is being performed, even if the PTZ is stopped, notification notifying that the PTZ state is "moving" is performed, and when tracking is not being performed, even if the PTZ state is "moving", notification notifying the PTZ state is "stopped" is performed, thus making it possible to more appropriately indicate to the user whether or not PTZ manipulation can be performed.

### Third Embodiment

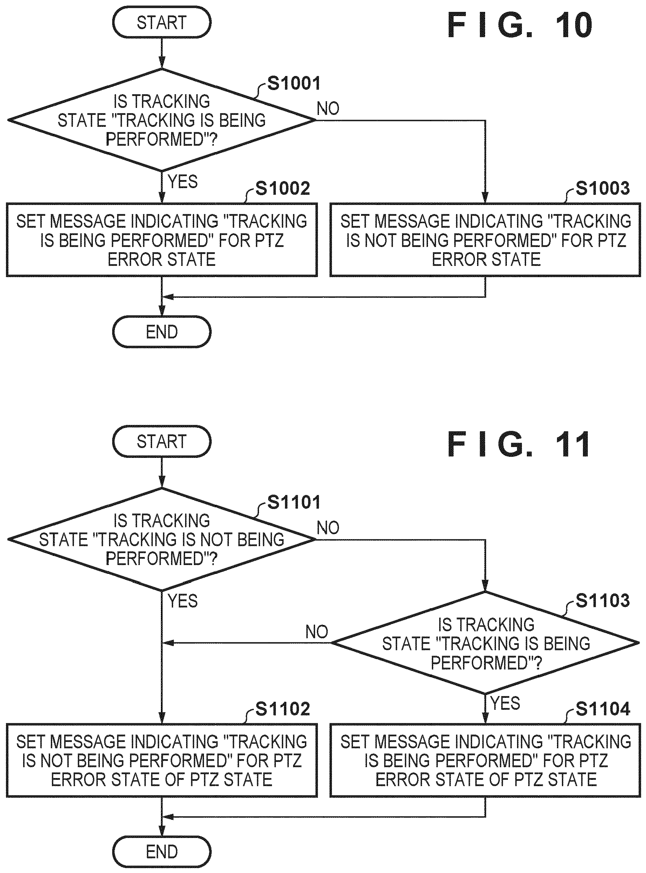

In the PTZ state obtaining processing in the first embodiment and the second embodiment, setting of a PTZ moving state that is to be included in a response to a PTZ state obtaining command is controlled based on a tracking state and a PTZ state. In the third embodiment, PTZ state obtaining processing for controlling settings of a PTZ error state of a PTZ state that is to be included in a response to a PTZ state obtaining command will be described. The PTZ state obtaining processing 604 of the monitoring camera 10 according to the third embodiment will be described below with reference to FIG. 10. Note that function configurations and the like of a monitoring system, a monitoring camera 10, and a client apparatus 20 are similar to those in the first embodiment (FIGS. 1 to 6). The PTZ state obtaining processing 604 that is different from that in the first embodiment will be described below with reference to the flowchart in FIG. 10. FIG. 10 is a flowchart showing PTZ state obtaining processing that is performed by the monitoring camera of the third embodiment.

In step S1001, the state obtaining unit 122 of the monitoring camera 10 obtains the tracking state from the storage unit 102. The change unit 123 determines whether or not the tracking state obtained by the state obtaining unit 122 indicates "tracking is being performed". If it is determined that the tracking state is "tracking is being performed", the procedure transitions to step S1002, otherwise the procedure transitions to step S1003. In step S1002, the change unit 123 sets a message indicating "tracking is being performed", for a PTZ error state of the PTZ state that is to be included in a response to a PTZ state obtaining command, and ends the procedure. On the other hand, in step S1003, the change unit 123 sets a message indicating that "tracking is not being performed", in the PTZ error state of the PTZ state that is to be included in the response to the PTZ state obtaining command, and ends the procedure.

As described above, according to the third embodiment, when the monitoring camera 10 is performing tracking, regardless of the PTZ operation state, a statement indicating that tracking is being performed is added to the PTZ error state, and is notified to the client apparatus 20. Accordingly, even when the PTZ operation is stopped, it is possible to indicate, to the user, that the PTZ is being used for tracking. As a result, it is possible to prevent the user from performing mistakenly PTZ manipulation while tracking is being performed.

Note that the above processing for stating that "tracking is being performed" in the PTZ error state is exemplary, and there is no limitation thereto, and, for example, the following processing may be performed. First, in step S1001, the state obtaining unit 122 obtains the tracking state and the PTZ state, and the change unit 123 determines whether or not "tracking is being performed and the PTZ state is stopped". If it is determined that "tracking is being performed and the PTZ state is stopped", (YES in step S1001), the change unit 123 executes step S1002, sets, in the PTZ error state, a message indicating that "tracking is being performed". In addition, if it is not determined that "tracking is being performed and the PTZ state is stopped" (NO in step S1001), the change unit 123 ends the procedure without adding a statement related to tracking to the PTZ error state (step S1003 in FIG. 10 is omitted). Also with such a configuration, the user can determine that the PTZ operation is stopped but tracking is being performed, and thus it is possible to prevent the user from mistakenly performing PTZ manipulation.

### Fourth Embodiment

In the third embodiment, a statement on whether or not tracking is being performed is added to a PTZ error state in accordance with whether or not tracking is being performed. In a fourth embodiment, a statement on whether or not tracking is being performed is added to a PTZ error state in accordance with whether or not the tracking state is "tracking is not being performed". PTZ state obtaining processing 805 of a monitoring camera 10 according to this embodiment will be described below with reference to FIG. 11. Note that function configurations and the like of a monitoring system, the monitoring camera 10, and a client apparatus 20 are similar to those in the first embodiment (FIGS. 1 to 6). The PTZ state obtaining processing 604 that is different from that in the first embodiment will be described below with reference to the flowchart in FIG. 11. FIG. 11 is a flowchart showing PTZ state obtaining processing that is performed by the monitoring camera of the fourth embodiment. A description of the same constituent elements as those in the first embodiment (FIGS. 1 to 5 and 8) is omitted.

In step S1101, the state obtaining unit 122 of the monitoring camera 10 obtains the tracking state from the storage unit 102. The change unit 123 determines whether or not the obtained tracking state indicates that tracking is not being performed. If it is determined that the racking state indicates that tracking is not being performed, the procedure transitions to step S1102, otherwise the procedure transitions to step S1103. In step S1102, the change unit 123 sets a message indicating that tracking is not being performed, in the PTZ error state of the PTZ state that is to be included in a response to a PTZ state obtaining command, and ends the procedure. On the other hand, in step S1103, the change unit 123 determines whether or not the tracking state obtained in step S1101 indicates that tracking is being performed. If it is determined that the tracking state does not indicate that tracking is being performed, the procedure transitions to step S1102, and if it is determined that the tracking state indicates that tracking is being performed, the procedure transitions to step S1104. In step S1104, the change unit 123 sets a message indicating that tracking is being performed, in the PTZ error state of the PTZ state that is to be included in the response to the PTZ state obtaining command, and ends the procedure.

As described above, according to the fourth embodiment, when the monitoring camera 10 is in a state where tracking is not being performed, regardless of the PTZ state, a statement indicating that tracking is not being performed is added to the PTZ error state, which is notified to the client apparatus 20. Accordingly, even when the PTZ state is "moving", it is possible to indicate, to the user, that the PTZ is not being used for a tracking operation, and to prevent the user from unnecessarily hesitating to perform PTZ manipulation.

Note that the above processing for stating in the PTZ error state that "tracking is not being performed" is exemplary, and there is no limitation thereto, and, for example, the following processing may be performed. First, in step S1101, the state obtaining unit 122 obtains the tracking state and the PTZ state, and the change unit 123 determines whether or not "tracking is not being performed and the PTZ is moving". If it is determined that "tracking is not being performed and the PTZ is moving" (YES in step S1101), the change unit 123 executes step S1102, and sets, in the PTZ error state, a message indicating that "tracking is not being performed". Otherwise (NO in step S1101), a statement relates to tracking is not set in the PTZ error state (steps S1103 and S1104 in FIG. 11 are omitted). Also with such a configuration, when the PTZ state is "moving", the user can determine that tracking is not being performed, and thus it is possible to prevent the user from unnecessarily hesitating to perform PTZ manipulation.

Moreover, the third embodiment and the fourth embodiment may be combined such that, when tracking is being performed and the PTZ is stopped, a statement that tracking is being performed is set in the PTZ error state, and when tracking is not being performed and the PTZ is moving, a statement that tracking is not being performed is set in the PTZ error state.

### Fifth Embodiment

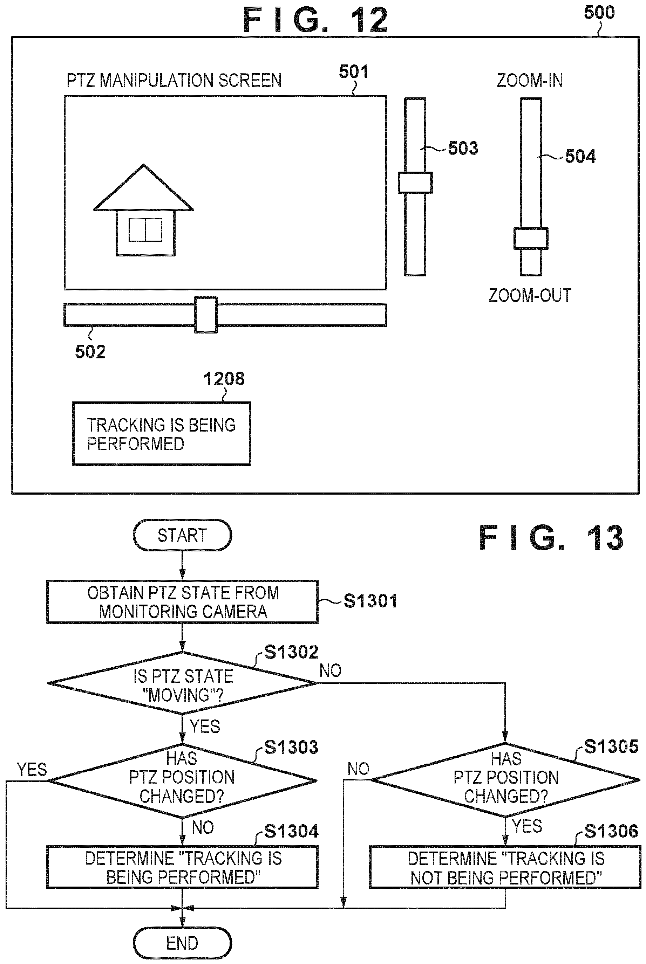

In a fifth embodiment, the client apparatus 20 that performs notification related to the state of a tracking operation based on the PTZ state obtained from a response to a PTZ state obtaining command from the monitoring camera 10 of the first embodiment and the second embodiment will be described. Note that function configurations of the monitoring system, the monitoring camera 10, and the client apparatus 20, a sequence of response of a PTZ state that is made by the monitoring camera 10, and the like are similar to those in the first embodiment (FIGS. 1 to 6). FIG. 12 is a diagram showing an example of the PTZ manipulation screen 500 of the client apparatus 20 according to the fifth embodiment. In addition, FIG. 13 is a flowchart showing processing in which the client apparatus 20 of the fifth embodiment determines the state of a tracking operation based on the PTZ moving state notified from the monitoring camera 10. The operation of the client apparatus 20 according to the fifth embodiment will be described below with reference to FIGS. 12 and 13.

The video image display area 501, the pan manipulation bar 502, the tilt manipulation bar 503, and the zoom manipulation bar 504 are the same as those described in the first embodiment (FIG. 5). In step S1301, the control unit 201 periodically transmits a PTZ state obtaining command to the monitoring camera 10 via the communication unit 206, and obtains the PTZ state. In step S1302, the control unit 201 determines whether or not the PTZ moving state in the obtained PTZ state is "moving". If it is determined in step S1302 that the PTZ moving state in is "moving", the procedure transitions to step S1303, otherwise the procedure transitions to step S1305. In step S1303, the control unit 201 determines whether or not the PTZ position of the PTZ state obtained in step S1301 has changed from a PTZ position obtained to this point (for example, a PTZ position obtained previously). If it is determined in step S1303 that the PTZ position has changed the control unit 201 determines in step S1304 that the state of a tracking operation of the monitoring camera 10 is "tracking is being performed". If it is not determined in step S1303 that the PTZ position has changed, step S1304 is skipped, and the procedure ends. On the other hand, if it is determined in step S1305 that the PTZ position of the PTZ state has changed, the control unit 201 determines in step S1306 that the state of the tracking operation of the monitoring camera 10 is "tracking is not being performed". If it is determined in step S1305 that the PTZ position of the PTZ state has changed, step S1306 is skipped and the procedure ends.

As described above, if the obtained PTZ state indicates that the PTZ moving state is "moving" but the PTZ position has not changed, the control unit 201 determines that tracking is being performed. The control unit 201 then displays "tracking is being performed" in a tracking state display area 1208 of the PTZ manipulation screen 500 that is displayed on the display unit 203. In addition, if the obtained PTZ state indicates that the PTZ moving state is "stopped" but the PTZ position has changed, the control unit 201 determines that tracking is not being performed. The control unit 201 then displays "tracking is not being performed" in the tracking state display area 1208 of the PTZ manipulation screen 500 that is displayed on the display unit 203.

As described above, according to the fifth embodiment, after the client apparatus 20 starts tracking, the PTZ state is obtained from the monitoring camera 10, and determines a tracking state based on the PTZ moving state of the PTZ state and a change in the PTZ position, and notifies the user of the tracking state. Accordingly, it is possible to prevent the user that performs PTZ manipulation from mistakenly performing PTZ manipulation while tracking is being performed, and the user from hesitating to perform PTZ manipulation while tracking is not being performed.

Note that, in the above embodiments, PTZ control has been illustrated as image capturing area control that is used for tracking control, but there is no limitation to this. Image capturing area control may also be PT control (zoom motion is not used) that uses pan and tilt motions, for example.

As described above, according to the above embodiments, a user such as a manager or a security guard can appropriately understand the PTZ state, and it is possible to prevent an erroneous operation of PTZ manipulation after tracking has been started and unnecessary hesitation regarding PTZ manipulation.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments) and/or that includes one or more circuits (e.g., application specific integrated circuit (ASIC)) for performing the functions of one or more of the above-described embodiments), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An image capturing apparatus (106,101) that includes a moving unit that moves an image capturing area: performs a tracking control for detecting a tracking target from a captured video image, and tracking the tracking target while controlling the moving unit to move the image capturing area of the image capturing apparatus; obtains information indicating a state of movement control of the image capturing area that is performed by the moving unit; transmits a response that includes the information indicating the obtained movement control state, to an external apparatus in accordance with a request from the external apparatus; and changes the information indicating the movement control state that is to be included in the response, based on a state of tracking that is performed in the tracking control.

## Claims

1. An image capturing control apparatus (106, 101) comprising:
image capturing area control means (132) for controlling movement of an image capturing area of an image capturing apparatus;
tracking control means (121) for detecting a tracking target from a captured video image, and tracking the tracking target while causing the image capturing area control means to move the image capturing area;
state obtaining means (122) for obtaining information indicating a state of movement control of the image capturing area that is performed by the image capturing area control means;
response means (124) for transmitting a response that includes the information indicating the movement control state obtained by the state obtaining means, to an external apparatus in accordance with a request from the external apparatus; and
change means (123) for changing the information indicating the movement control state that is to be included in the response, based on a state of tracking that is performed by the tracking control means.

2. The apparatus according to claim 1, wherein, when the state of tracking that is performed by the tracking control means indicates that tracking is being performed, the change means changes the information indicating the movement control state so as to indicate that the image capturing area is moving, regardless of whether or not the image capturing area is being moved by the image capturing area control means.

3. The apparatus according to claim 1 or 2, wherein, when the state of tracking that is performed by the tracking control means is a state where tracking is not being performed, the change means changes the information indicating the movement control state so as to indicate that the image capturing area is stopped, regardless of whether or not the image capturing area is being moved by the image capturing area control means.

4. The apparatus according to claim 3, wherein the state where tracking is not being performed includes a state where a tracking target is lost and tracking is not performed.

5. The apparatus according to claim 4, wherein, in the state where a tracking target is lost and tracking is not performed, the tracking control means returns the image capturing area of the image capturing apparatus to a predetermined state, and performs processing for detecting a tracking target.

6. The apparatus according to any one of claims 1 to 5, wherein the change means determines whether or not to execute a change, based on whether or not a user level of the request is "manager".

7. The apparatus according to any one of claims 1 to 6, wherein the change means changes information indicating whether or not the image capturing area is moving, in the information indicating the movement control state.

8. The apparatus according to claim 7, wherein the image capturing area control means controls at least one of pan, tilt, and zoom of the image capturing apparatus, and
the change means changes information indicating a moving state of at least one of pan, tilt, and zoom.

9. The apparatus according to claim 1, wherein, when the tracking control means is performing tracking, the change means changes information regarding an error state in the information indicating the movement control state that is to be included in the response, so as to indicate that tracking is being performed, and, when the tracking control means is not performing tracking, the change means changes the information regarding the error state so as to indicate that tracking is not being performed.

10. The apparatus according to claim 1, wherein, when the tracking control means is performing tracking and information indicating the movement control state obtained by the state obtaining means indicates that movement of the image capturing area is stopped, the change means changes a PTZ error state included in the information indicating the movement control state, so as to indicate that tracking is being performed.

11. The apparatus according to claim 1, wherein, when the tracking control means is performing tracking processing but tracking is not being performed, that is, a tracking target is not actually being tracked, the change means changes the information regarding an error state included in the information indicating the movement control state, so as to indicate that tracking is not being performed.

12. The apparatus according to claim 1, wherein, when the tracking control means is not performing tracking and the information indicating the movement control state obtained by the state obtaining means indicates that the image capturing area is moving, the change means changes the information regarding an error state included in the information indicating the movement control state, so as to indicate that tracking is not being performed.

13. An image capturing apparatus (10) comprising:
an image capturing unit (103, 131);
image capturing area control means (132) for controlling movement of an image capturing area of the image capturing unit;
tracking control means (121) for detecting a tracking target from a captured video image, and tracking the tracking target while causing the image capturing area control means to move the image capturing area;
state obtaining means (122) for obtaining information indicating a state of movement control of the image capturing area that is performed by the image capturing area control means;
response means (124) for transmitting a response that includes the information indicating the movement control state obtained by the state obtaining means, to an external apparatus in accordance with a request from the external apparatus; and
change means (123) for changing the information indicating the movement control state that is to be included in the response, based on a state of tracking that is performed by the tracking control means.

14. An information processing apparatus (20) that is to be communicably connected to an image capturing apparatus, the information processing apparatus comprising:
obtaining means (201, S1301) for obtaining information regarding a state of moving of an image capturing area that is performed in image capturing area control and a control state indicating a position of the image capturing area, from the image capturing apparatus;
determination means (201, S1302-S1306) for determining a state of tracking that is being performed by the image capturing apparatus based on information regarding the control state obtained by the obtaining means,
notification means (201, 203, 500, 1208) for notifying a user of the tracking state determined by the determination means.

15. The apparatus according to claim 14, wherein, when the moving state of the image capturing area is "moving" and the information regarding the control state indicates that the position of the image capturing area has not changed, the determination means determines that state of tracking that is being performed by the image capturing apparatus is "tracking is being performed".

16. The apparatus according to claim 14 or 15, wherein, when the moving state of the image capturing area is "stopped" and the information regarding the control state indicates that the position of the image capturing area has changed, the determination means determines that tracking processing is being performed by the image capturing apparatus, but tracking is not being performed, that is, a tracking target is not actually being tracked.

17. A control method of an image capturing apparatus (10) that includes moving means (132) for moving an image capturing area, the method comprising:
a tracking step (601-602, 801-802) of detecting a tracking target from a captured video image, and tracking the tracking target while controlling the moving means to move the image capturing area of the image capturing apparatus;
a state obtaining step (604, 805) of obtaining information indicating a state of movement control of the image capturing area that is performed by the moving means;
a responding step (11, 811) of transmitting a response that includes the information indicating the movement control state obtained in the state obtaining step, to an external apparatus in accordance with a request from the external apparatus; and
a changing step (S701-S704, S901-S904, S1001-S1003, S1101-S1104) of changing the information indicating the movement control state that is to be included in the response, based on a state of tracking that is performed in the tracking control.

18. A control method of an information processing apparatus (20) that is to be communicably connected to an image capturing apparatus, the method comprising:
an obtaining step (S1301) of obtaining information regarding a state of moving of an image capturing area that is performed in image capturing area control and a control state indicating a position of the image capturing area, from the image capturing apparatus;
a determining step (S1302-S1306) of determining a state of tracking that is performed by the image capturing apparatus based on the information regarding the control state obtained in the obtaining step; and
a notifying step (500, 1208) of notifying a user of the tracking state determined in the determining step.

19. A program for causing a computer to execute the control method according to claim 17 or 18.
